# EUROPÄISCHE PATENTANMELDUNG

(11) **EP 1 555 243 A1**
(43) Veröffentlichungstag der Anmeldung: **20.07.2005**
(21) Anmeldenummer: 04405033.4
(22) Anmeldetag: 19.01.2004
(51) Int. Cl.: C01D 1/42, B01D 1/26

(54) **Verfahren zu einer Aufbereitung einer wässrigen Lösung, insbersondere Natronlauge, mittels Mehrstufenverdampfung**

(71) Anmelder: GEA Messo AG, 4010 Basel (CH)
(72) Erfinder: Die Erfindernennung liegt noch nicht vor
(74) Vertreter: Rentsch, Rudolf A.

(57) **Zusammenfassung**

Das Verfahren zu einer Aufbereitung einer wässrigen Lösung, insbesondere Natronlauge, umfasst eine Mehrstufenverdampfung. Aus der wässrigen Lösung - in Form einer heissen Einspeiselösung (L) - werden Produktströme (4,5) erzeugt, nämlich Ströme von Konzentrat sowie von Brüdenkondensat. Der Strom der Einspeiselösung wird auf zwei Verdampfungsapparate, nämlich einen Apparat A und einen Apparat B, verteilt. Durch die Mehrstufenverdampfung wird die dem Apparat A zugeführte Einspeiselösung zu einer ersten konzentrierten Produktlösung (C1) aufkonzentriert. Dabei bildet vorzugsweise der Apparat A eine letzte Stufe der Mehrstufenverdampfung und die Einspeiselösung wird im Gegenlauf zum Transport der Brüden (Bᵢ) durch weitere Verdampfungsstufen I bis V geleitet. Brüden (Bᵢ) der Mehrstufenverdampfung werden zu Brüdenkondensaten (Kᵢ) verflüssigt. Ein Teil dieser Brüden (B₅) wird im Apparat B zum Eintrag von Heizwärme verflüssigt. Im Apparat B wird eine zweite konzentrierte Produktlösung (C2) erzeugt, wobei die Konzentrationen der genannten Produktlösungen (C1,C2) sich nicht um mehr als 20% bezogen auf die höhere Konzentration unterscheiden. Die erste konzentrierte Produktlösung (C1) weist vorzugsweise eine niedrigere Konzentration auf.

## Beschreibung

Die Erfindung betrifft ein Verfahren zu einer Aufbereitung einer wässrigen Lösung, insbesondere zu einer Aufbereitung von Natronlauge, mittels Mehrstufenverdampfung gemäss Oberbegriff von Anspruch 1.

Zur Gewinnung von Tonerde (Al₂O₃) aus rotem Bauxit muss aus diesem Tonmineral Eisenoxid entfernt werden. Dies wird industriell mittels einem nassen Aufschluss, dem "Bayer-Verfahren", durchgeführt (vgl. Ullmanns Encyklopädie der technischen Chemie, 1974, Bd.7, S. 305 - 321). Beim Bayer-Verfahren wird eine Aufschlämmung von Bauxit mit Natronlauge (wässrige Lösung von Na₂O) in Autoklaven erhitzt. Es entsteht eine Lösung von Aluminiumhydroxid (Al(OH)₃), die "Aluminatlauge", und ein Rotschlamm, der Eisenoxid enthält und der durch Filtrieren aus der Lauge entfernt werden kann. Das Al(OH)₃ wird durch Verdünnen der Aluminatlauge und Zusatz von Kristallisationskeimen auskristallisiert. Das Kristallisat lässt sich zu Tonerde brennen (Al(OH)₃ → Al₂O₃ + 3 H₂O). Eine beim Kristallisieren zurückbleibende Aluminatlauge ist eine verdünnte Natronlauge, die mittels einer Mehrstufenverdampfung aufkonzentrierbar ist. Die Aluminatlauge wird in die letzte Stufe der Mehrstufenverdampfung eingespeist, in der ein letztes Mal Brüden, die jeweils in einer Vorgängerstufe abgedampft worden sind, als Wärmequelle genutzt werden. Die aufbereitete Natronlauge, die ein mit der Mehrstufenverdampfung erzeugtes Konzentrat ist, lässt sich für den nassen Aufschluss des roten Bauxits wieder verwenden.

Die zu aufbereitende Natron- oder Aluminatlauge hat eine Temperatur, die in der Regel grösser als 70°C und somit höher als die Verdampfungstemperatur der letzten Stufe ist. Der Temperaturüberschuss entspricht einer Wärmemenge, die für eine Aufkonzentrierung durch ein zusätzliches Abdampfen von Wasser genutzt werden kann. Bei einem bekannten Verfahren, bei der die Anzahl der Verdampfungsstufen sechs ist, wird die heisse Einspeiselösung in zwei Teilströme geteilt und diese in die fünfte bzw. sechste Stufe eingespeist. Das Zwischenprodukte der sechsten Stufe wird in die fünfte Stufe weiter geleitet.

Aufgabe der Erfindung ist es, ein Verfahren zu einer Aufbereitung einer wässrigen Lösung zu schaffen, welches gegenüber dem bekannten Verfahren - mit einer Unterteilung der Einspeiselösung in zwei Teilströme - hinsichtlich der Energiebilanz günstiger ist. Diese Aufgabe wird durch das im Anspruch 1 definierte Verfahren gelöst.

Das Verfahren zu einer Aufbereitung einer wässrigen Lösung, insbesondere Natronlauge, umfasst eine Mehrstufenverdampfung. Aus der wässrigen Lösung - in Form einer heissen Einspeiselösung- werden Produktströme erzeugt, nämlich Ströme von Konzentrat sowie von Brüdenkondensat. Der Strom der Einspeiselösung wird auf zwei Verdampfungsapparate, nämlich einen Apparat A und einen Apparat B, verteilt. Durch die Mehrstufenverdampfung wird die dem Apparat A zugeführte Einspeiselösung zu einer ersten konzentrierten Produktlösung aufkonzentriert. Dabei bildet vorzugsweise der Apparat A eine letzte Stufe der Mehrstufenverdampfung und die Einspeiselösung wird im Gegenlauf zum Transport der Brüden durch weitere Verdampfungsstufen geleitet. Brüden der Mehrstufenverdampfung werden zu Brüdenkondensaten verflüssigt. Ein Teil dieser Brüden wird im Apparat B zum Eintrag von Heizwärme verflüssigt. Im Apparat B wird eine zweite konzentrierte Produktlösung erzeugt, wobei die Konzentrationen der genannten Produktlösungen sich nicht um mehr als 20 % bezogen auf die höhere Konzentration unterscheiden. Die erste konzentrierte Produktlösung weist vorzugsweise eine niedrigere Konzentration auf.

Die abhängigen Ansprüche 2 bis 8 betreffen vorteilhafte Ausführungsformen des erfindungsgemässen Verfahrens. Eine Anwendungsmöglichkeit des erfindungsgemässen Verfahrens und eine Anlage zum Durchführen dieses Verfahrens sind jeweils Gegenstand der Ansprüche 9 bzw. 10.

Nachfolgend wird die Erfindung anhand der Zeichnungen erläutert. Es zeigen:
- Fig. 1: eine Verdampfungsstufe zu einer Mehrstufen-Verdampfungsanlage,
- Fig. 2: die Verdampfungsstufe der Fig. 1 mit zusätzlichen Komponenten,
- Fig. 3 - 5: Blockbilder zu drei Verdampfungsstufen,
- Fig. 6: eine erfindungsgemässe Mehrstufen-Verdampfungsanlage und
- Fig. 7 und 8: zwei weitere Varianten zur erfindungsgemässen Anlage.

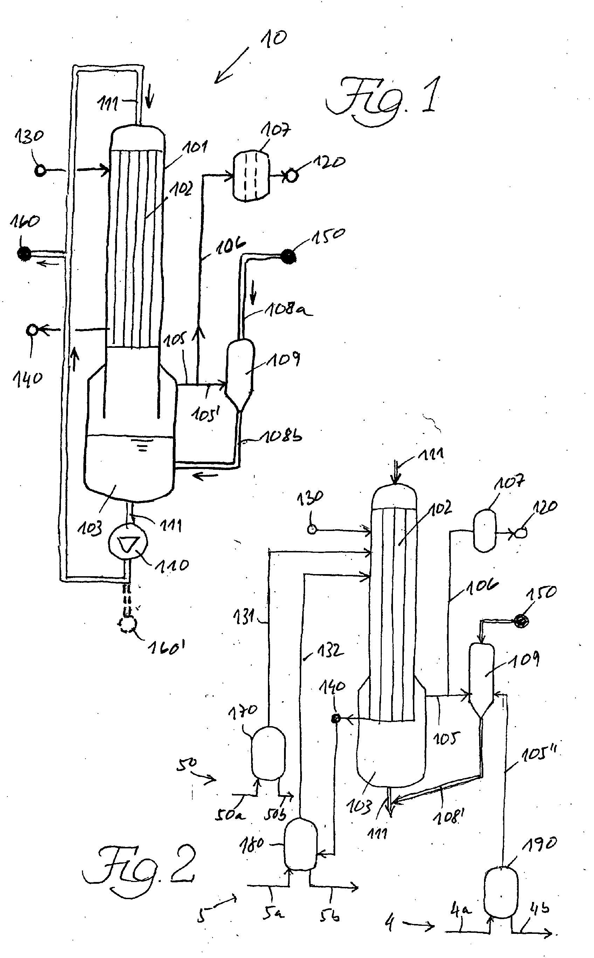

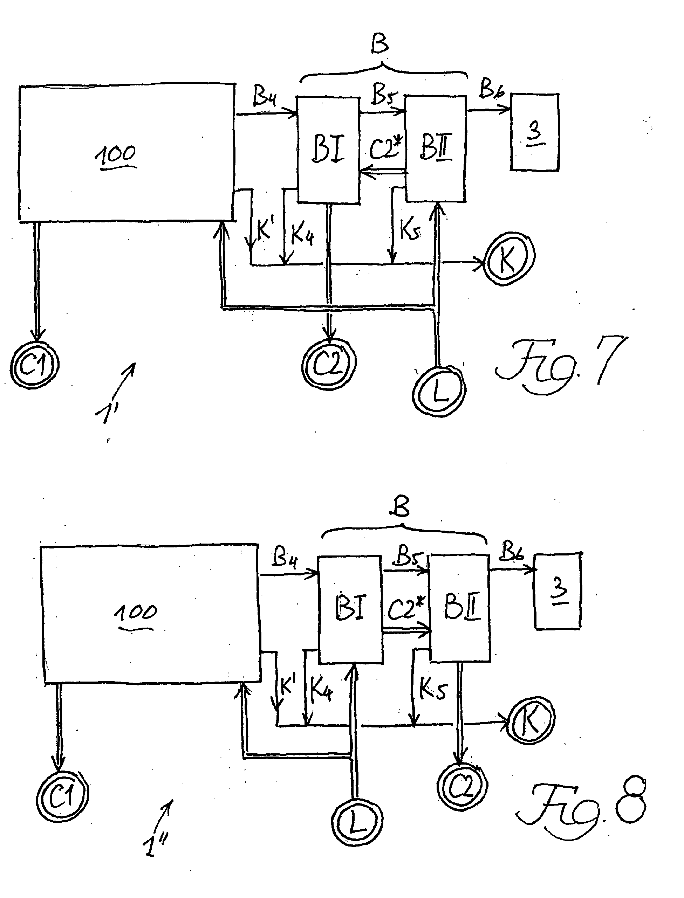

Eine Verdampfungsstufe 10, wie sie in Fig. 1 abgebildet ist, lässt sich beim erfindungsgemässen Verfahren in einer seriellen Anordnung einsetzen. Eine entsprechende Mehrstufen-Verdampfungsanlage 1 mit fünf Verdampfungsstufen 10, die mit römischen Ziffern I bis V bezeichnet sind, ist in Fig. 6 dargestellt. Die dabei verwendeten Blockdarstellungen 11, 12 und 15 der einzelnen Verdampfungsstufen 10 werden anhand der Figuren 3 bis 4 erläutert. Erfindungsgemäss umfasst die Anlage 1 neben der Stufe V, die ein Apparat A ist, einen zusätzlichen Apparat B, der gleich wie der Apparat A ausgebildet ist (Blockdarstellung 15).

Die Verdampfungsstufe 10 der Fig. 1 umfasst in einem Gehäuse 101 einen Verdampfer 102, in dem die Aufkonzentrierung von Lauge stattfindet. Zwischen einem Sumpf 103 und dem Verdampfer 102 werden Brüden durch Leitungen 105, 106 und einen Tröpfchenabscheider 107 einem Ausgang 120 zugeleitet. Durch einen Eingang 150 wird zu behandelnde Lauge eingespeist. Ein Vorwärmer 109 für die Lauge befindet sich zwischen Leitungsabschnitten 108a und 108b. Die Wärmezufuhr in den Vorwärmer 109 erfolgt mit Brüden, die durch die Verzweigungsleitung 105' zugeführt werden und die eine direkte Wärmeabgabe ausüben, nämlich durch Kondensation auf versprühter Lauge. Die Lauge wird mit einer Pumpe 110 und durch eine Rückführleitung 111 umgewälzt. Die Wärmezufuhr in den Verdampfer 102 erfolgt durch einen Eingang 130, durch den Wasserdampf oder Brüden eingespeist werden. Bei der Wärmeabgabe an die umgewälzte Lauge entsteht aus dem Wasserdampf bzw. den Brüden ein Kondensat, das durch den Ausgang 140 aus der Verdampfungsstufe 10 abgeleitet werden kann. Die Rückführleitung 111 enthält aufkonzentrierte Lauge, die durch einen Ausgang 160 oder 160' als Zwischen- bzw. Endprodukt entnommen werden kann.

Die Verdampfer 102 sind mit Vorteil als Fallfilmverdampfer ausgebildet.

In der ersten Verdampfungsstufe 10, der Stufe I, sind die Temperaturen, bei denen die Kondensation des Wasserdampfs bzw. die Verdampfung der Lauge stattfinden, am grössten. Die entsprechenden Temperaturen der folgenden Stufen nehmen progressiv ab. Die Dampfdrücke nehmen in entsprechender Weise ebenfalls progressiv ab. Es ist daher möglich, aus den Kondensaten mittels Entspannungsverdampfern, Wasserdampf (Brüden) zu erzeugen, der in nachfolgenden Stufen als Wärmequellen verwendbar ist. Dies ist anhand der Fig. 2 illustriert, indem dort die zusätzlichen Komponenten 170, 180 und 190 eingezeichnet sind: Heisses Kondensat 50a eines Kondensatstroms 50 aus der Stufe I lässt sich in einem Entspannungsverdampfer 170 unter Abgabe von Dampf (Leitung 131) und Erzeugung eines abgekühlten Kondensats 50b nutzen. Das Kondensat 50b kann weiteren Entspannungsverdampfern zugeführt werden, in denen Dampf oder Brüden bei einem tieferen Druck abgebbar sind. Diese Brüden werden in Verdampfungsstufen eingespeist, die hinsichtlich dem Dampfdruck geeignet sind. Mit einem Strom 5, der aus Brüdenkondensaten besteht, lässt sich in entsprechender Weise Dampf in Entspannungsverdampfern 180 erzeugen (Zulauf von heissem Kondensat 5a und Kondensat aus dem Ausgang 140, Ablauf von abgekühltem Kondensat 5b). Mit einem Produktstrom 4 des erzeugten Konzentrats lässt sich ebenfalls in entsprechender Weise Dampf in Entspannungsverdampfern 190 erzeugen (Zulauf von heissem Konzentrat 4a, Ablauf von abgekühltem Konzentrat 4b). Der im Entspannungsverdampfer 190 gebildete Dampf wird durch die Leitung 105" in den Vorwärmer 109 eingespeist. Die vorgewärmte Lauge wird anders als in Fig. 1 in die Rückführleitung 111 eingespeist (Leitung 108'). Mit Vorteil ist eine zusätzliche Pumpe vorgesehen, eine Transferpumpe, die an den Sumpf 103 angeschlossen ist und die aufkonzentrierte Lauge direkt durch eine separate Leitung zum Ausgang fördert. Die Transferpumpe und zugehörige Leitung sind nicht dargestellt. Dem genannten Ausgang kann auch das Bezugszeichen 160 zugeordnet werden.

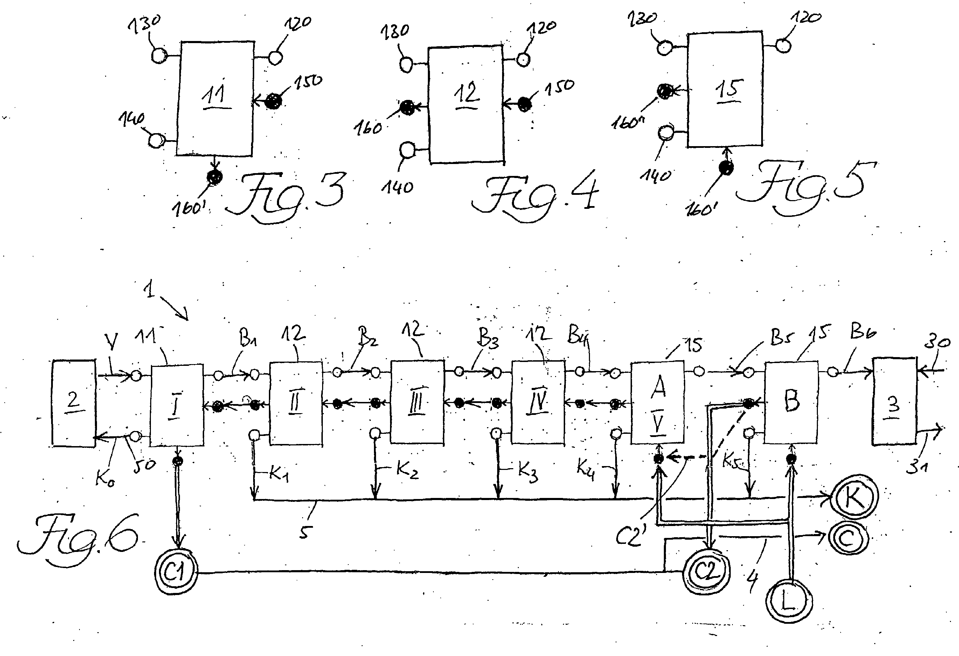

Die in den Figuren 3 - 4 gezeigten Blockbilder entsprechen im wesentlichen den Verdampfungsstufen 10 der Figuren 1 oder 2. Unterschiede sind durch die Anschlüsse gegeben: Die Anschlüsse 120, 130 und 140 sind jeweils gleich. Im Block 11 der Fig. 3 wird Produktlösung durch den Anschluss 160' abgeführt (vgl. Fig. 1). Lauge, die aufzukonzentrieren ist, wird im Block 11 wie auch im Block 12, Fig. 4, durch den Eingang 150 eingespeist. Ein entsprechender Eingang ist im Block 15, Fig. 5, der Eingang 160', der im Block 11 ein Ausgang ist. In den Blöcken 12 und 15 wird aufkonzentrierte Lauge durch die Ausgänge 160 bzw. 160" weiter geleitet.

Die Mehrstufen-Verdampfungsanlage der Fig. 6 zur Durchführung des erfindungsgemässen Verfahrens umfasst einen Block 11 (Stufe I), drei Blöcke 12 (Stufen II bis IV) und zwei Blöcke 15 (Stufe V = Apparat A; Apparat B). Die Stufe I wird mit Heizdampf, nämlich Wasserdampf V aus einem Dampferzeuger 2, beheizt. Mindestens ein überwiegender Anteil des kondensierten Heizdampfs, K₀, wird in den Dampferzeuger 2 zurückgeführt. Ein kleiner Teil des Kondensatstroms 50 kann in Entspannungsverdampfern 170 (vgl. Fig. 2) an die nachfolgenden Stufen abgegeben werden. Aus der Stufe I werden Brüden B₁ als Wärmequelle für die Stufe II weiter geleitet und als Brüdenkondensat K₁ in den Kondensatstrom 5 abgegeben. Wie oben beschrieben kann aus diesem Kondensatstrom 5 Wärme an die nachfolgenden Stufen abgegeben werden (mittels Entspannungsverdampfern 180, Fig. 2). Entsprechend werden Brüden Bᵢ (i = 2, 3, 4 und 5) an die folgenden Stufen sowie an den Apparat B abgegeben und Brüdenkondensate Kᵢ (i = 2, 3, 4 und 5) in den Kondensatstrom 5 eingespeist. Alle partiellen Brüdenkondensate Kᵢ (i = 1, ... ) ergeben zusammen das Brüdenkondensat K.

Die im Apparat B abgedampften Brüden B₆ werden mit Vorteil in einer Einrichtung 3 auskondensiert und an die Umgebung abgegeben. Die Brüden B₆ können beispielsweise mittels einem Kühlwasserstrom 30, 31 auf versprühtes Kühlwasser auskondensiert werden.

Beim erfindungsgemässen Verfahren werden aus einer wässrigen Lösung - in Form einer heissen Einspeiselösung L - Produktströme erzeugt, nämlich Ströme von Konzentrat C1 und Konzentrat C2 sowie von Brüdenkondensat K. Der Strom der Einspeiselösung L wird auf die zwei Verdampfungsapparate A und B verteilt. Der Apparat A bildet die letzte Stufe, nämlich die Stufe V der Mehrstufenverdampfung, in die ein Teil der Einspeiselösung L im Gegenlauf zum Transport der Brüden Bᵢ (i = 1, 2, 3 und 4) durch die Stufen geleitet und in diesen zu einer ersten konzentrierten Produktlösung C1 aufkonzentriert wird. Brüden B₅ werden aus dem Apparat A zum Eintrag von Heizwärme im Apparat B kondensiert; und kondensierte Brüden K₅ werden zu dem zu erzeugenden Brüdenkondensat K zugeführt. Im Apparat B wird erfindungsgemäss einstufig eine zweite konzentrierte Produktlösung C2 erzeugt. Dabei unterscheiden sich die Konzentrationen der genannten Produktlösungen C1, C2 nicht um mehr als 20 % bezogen auf die höhere Konzentration. Vorteilhafterweise ist die Konzentration von C2 grösser als jene von C1, da dadurch ein Aufbau von Ablagerungen in der ersten Stufe verlangsamt oder verhindert wird.

Die Kondensate und Konzentrate lassen sich zu zwei Produktströmen zusammenführen: einerseits zu einem gemeinsamen Konzentratstrom 4 aus den beiden Produktlösungen C1, C2, wobei sich das Produkt C ergibt, und andererseits zum Strom 5 des Brüdenkondensats K aus den kondensierten Brüden der Mehrstufenverdampfung, Kᵢ (i = 1, ... 4 ), und des Apparats B, K₅. Das Brüdenkondensat K lässt sich im Bayer-Verfahren als Waschwasser bei einer Separierung des Kristallisats aus der Aluminatlauge verwenden.

Die kaustische Na₂O-Konzentratio der zu behandelnden Lauge, d.h. der heissen Einspeiselösung L, hat einen Wert im Bereich zwischen 100 und 190 g/l (20°C). Die Na₂O-Konzentrationen der Produktlösungen C1 und C2 haben Werte im Bereich zwischen 140 und 260 g/l.

Die Temperatur der heissen Einspeiselösung L beträgt mindestens 70°C, vorzugsweise mindestens 80°C. Die Anzahl der Verdampfungsstufen der Mehrstufenverdampfung ist insbesondere kleiner als sechs. Die Temperaturdifferenzen zwischen aufeinander folgenden Stufen sind jeweils grösser als 10 K.

Die Lauge L wird auf die Apparate A und B in einem Verhältnis verteilt, dessen Wert im Bereich zwischen 1 : 1 und 3 : 1 liegt und vorzugsweise 2 : 1 ist.

Das erfindungsgemässe Verfahren wird mit Vorteil in einem Bayer-Verfahren zur Gewinnung von Aluminiumoxid aus Bauxit angewendet, wobei mit dem Verfahren eine Na₂O enthaltende Aluminatlauge aufkonzentriert wird.

Beim vorbekannten Verfahren, das Ausgangspunkt zum erfindungsgemässen Verfahren ist und bei dem die Anzahl der Verdampfungsstufen sechs beträgt, wird ähnlich vorgegangen: Die heisse Einspeiselösung L wird in zwei Teilströme geteilt und diese in die fünfte bzw. sechste Stufe eingespeist, wobei diese Stufen (V, VI) den Apparaten A und B entsprechen. Anders als beim erfindungsgemässen Verfahren wird ein Konzentrat C2' aus der Stufe VI (Apparat B) in die fünfte Stufe (Stufe V) eingespeist, wie es in Fig. 6 durch eine gestrichelte Verbindung angedeutet ist. Beim vorbekannten Verfahren gibt es kein Konzentrat C2 sondern nur das Konzentrat C (= C1). Dieser Unterschied ergibt einen energetischen Vorteil des erfindungsgemässen Verfahrens, der wirtschaftlich sehr interessant ist.

Vergleicht man für ein Ausführungsbeispiel den Bedarf an Heizdampf, der in der ersten Stufe (Stufe I) bei gleichen Mengen an zu behandelnder Lauge L (862.8 t) benötigt wird, so erhält man ein Verhältnis von 47.15 t : 50.34 t (= 0.937 : 1) zu Gunsten des erfindungsgemässen Verfahrens, bei dem also 6.3 % weniger Heizdampf erforderlich ist. Die Lauge L wird bei diesem Beispiel im Verhältnis 2 : 1 auf die Apparate A und B verteilt. Die Temperaturen des Heizdampfs bzw. der Brüden sind: 152°C (Stufe I), 124°C (Stufe II), 108°C (Stufe III), 95°C (Stufe IV), 82°C (Stufe V = Apparat A) und 69°C (Apparat B). Aus 862.8 t/h Lauge entstehen 662.8 t/h Konzentrat C. Bei der Mehrstufenverdampfung des erfindungsgemässen Verfahrens muss weniger Lauge durch die Verdampfungsstufen 10 gefördert werden. Entsprechend ist auch der energetische Aufwand für den Antrieb der Transferpumpen geringer.

Die Figuren 7 und 8 zeigen zwei weitere Varianten zur erfindungsgemässen Anlage, in welcher der Apparat B aus zwei Verdampfungsstufen BI und BII zusammen gesetzt ist (Im Prinzip wären auch noch mehr Stufen möglich). Die beiden Verdampfungsstufen BI, BII können als eine Gegenstrom- (siehe Fig. 7) oder eine Gleichstromanordnung (Fig. 8) geschaltet sein. Die in den Figuren 7 und 8 dargestellten Anlagen 1' bzw. 1" sind bis auf den geänderten Apparat B gleich wie die Anlage 1. Die Mehrstufenverdampfung mit Verdampungsstufen 10 (einschliesslich Apparat A) ist vereinfacht durch einen Block 100 dargestellt. Sie kann statt fünf auch nur vier Stufen umfassen. Dem gesamten durch die Mehrstufenverdampfung abgegebenen Brüdenkondensat ist das Bezugszeichen K' zugeordnet.

In der Anlage 1' wird ein Teil der Lauge L in die Stufe BII eingespeist, und das dort gewonnene Zwischenprodukt C2* in die Stufe BI im Gegenlauf zu den Brüden B₅ weiter gefördert. In der Anlage 1" wird Lauge L in die Stufe BI eingespeist, und das dort gewonnene Zwischenprodukt C2* in die Stufe BII im Gleichlauf mit den Brüden B₅ weiter gefördert.

Grundsätzlich könnte die Mehrstufenverdampfung (Block 100) auch mit einer Gleichstromanordnung realisiert werden (Brüden Bᵢ und Lauge L bzw. Zwischenprodukte im Gleichlauf). Diese Möglichkeit ist jedoch weniger vorteilhaft.

## Patentansprüche

1. Verfahren zu einer Aufbereitung einer wässrigen Lösung, insbesondere Natronlauge, welches Verfahren eine Mehrstufenverdampfung umfasst, wobei
- aus der wässrigen Lösung - in Form einer heissen Einspeiselösung (L) - Produktströme (4, 5) erzeugt werden, nämlich Ströme von Konzentrat sowie von Brüdenkondensat,
- der Strom der Einspeiselösung auf zwei Verdampfungsapparate, nämlich einen Apparat A und einen Apparat B, verteilt wird,
- durch die Mehrstufenverdampfung die dem Apparat A zugeführte Einspeiselösung zu einer ersten konzentrierten Produktlösung (C1) aufkonzentriert wird, wobei vorzugsweise der Apparat A eine letzte Stufe der Mehrstufenverdampfung bildet und die Einspeiselösung im Gegenlauf zum Transport der Brüden (Bᵢ) durch weitere Verdampfungsstufen (10) geleitet wird,
- Brüden (Bᵢ) der Mehrstufenverdampfung zu Brüdenkondensaten (Kᵢ) verflüssigt werden, und
- ein Teil dieser Brüden (B₅) im Apparat B zum Eintrag von Heizwärme verflüssigt wird,
**dadurch gekennzeichnet, dass** im Apparat B eine zweite konzentrierte Produktlösung (C2) erzeugt wird, wobei die Konzentrationen der genannten Produktlösungen (C1, C2) sich nicht um mehr als 20 % bezogen auf die höhere Konzentration unterscheiden und die erste konzentrierte Produktlösung (C1) vorzugsweise eine niedrigere Konzentration aufweist.

2. Verfahren nach Anspruch 1, **dadurch gekennzeichnet, dass** Zusammenführungen zu zwei Produktströmen vorgenommen werden: einerseits zu einem gemeinsamen Konzentratstrom (4, C) aus den beiden Produktlösungen (C1, C2) und andererseits zum Strom des Brüdenkondensats (5, K) aus den kondensierten Brüden (Kᵢ) der Mehrstufenverdampfung und des Apparats B, wobei die im Apparat B abgedampften Brüden (B₆) mit Vorteil auskondensiert an die Umgebung abgegeben werden.

3. Verfahren nach Anspruch 1 oder 2, **dadurch gekennzeichnet, dass** die Mehrstufenverdampfung mittels einer Kaskade von Apparaten (10; 11, 12, 15) durchgeführt wird, die alle gleich wie der Apparat A - insbesondere als Fallfilmverdampfer (10, 102) - ausgebildet sind, dass die erste Verdampfungsstufe mit Heizdampf, nämlich Wasserdampf (V) aus einem Dampferzeuger (2), beheizt wird und dass mindestens ein überwiegender Anteil des kondensierten Heizdampfs (K₀) in den Dampferzeuger zurückgeführt wird.

4. Verfahren nach einem der Ansprüche 1 bis 3, **dadurch gekennzeichnet, dass** der Apparat B aus einer oder mindestens zwei Verdampfungsstufen (10) gebildet ist, dass im Fall von mindestens zwei Verdampfungsstufen diese im Gegenstrom oder im Gleichstrom zusammen geschaltet sein können, und dass im Fall von einer Verdampfungsstufe der Apparat A und der Apparat B vorzugsweise gleich ausgebildet sind.

5. Verfahren nach einem der Ansprüche 1 bis 4, **dadurch gekennzeichnet, dass** aus den Produktströmen (4, 5) mittels Entspannungsverdampfung zur Nutzung als zusätzliche Heizwärmequellen Brüden (132, 105") erzeugt werden, wobei diese Brüden in Verdampfungsstufen (10) eingespeist werden, die hinsichtlich dem Dampfdruck geeignet sind, und dass zum gleichen Zweck auch Brüden (131) aus dem Kondensat des Heizdampfs (K₀, 50) gewonnen werden können.

6. Verfahren nach einem der Ansprüche 1 bis 5, **dadurch gekennzeichnet, dass** die kaustische Na₂O-Konzentration der heissen Einspeiselösung (L) einen Wert im Bereich zwischen 100 und 190 g/l hat und die Na₂O-Konzentrationen der Produktlösungen (C1, C2) Werte im Bereich zwischen 140 und 260 g/l haben.

7. Verfahren nach einem der Ansprüche 1 bis 6, **dadurch gekennzeichnet, dass** die Temperatur der heissen Einspeiselösung (L) mindestens
